# EUROPEAN PATENT SPECIFICATION

(11) **EP 1 858 275 B1**
(45) Date of publication and mention of the grant of the patent: **22.07.2009**
(21) Application number: 06805010.3
(22) Date of filing: 20.10.2006
(51) Int. Cl.: H04W 4/06

(54) **METHOD AND SYSTEM FOR IMPLEMENTING GROUP CALL SERVICE**
VERFAHREN UND SYSTEM ZUR IMPLEMENTIERUNG EINES GRUPPENRUFDIENSTES
PROCEDE ET SYSTEME DE MISE EN OEUVRE D'UN SERVICE D'APPEL DE GROUPE

(30) Priority: 16.11.2005 CN 200510125208
(43) Date of publication of application: 21.11.2007
(73) Proprietor: Huawei Technologies Co., Ltd., Longgang District Shenzhen Guangdong 518129 (CN)
(72) Inventor: LU, Liankui, Shenzhen, Guangdong 518129 (CN); HOU, Zhiqiang, Shenzhen, Guangdong 518129 (CN); DAI, Mingyang, Shenzhen, Guangdong 518129 (CN); WANG, Fei, Shenzhen, Guangdong 518129 (CN); SUN, Lianfeng, Shenzhen, Guangdong 518129 (CN); GAO, Shuliang, Shenzhen, Guangdong 518129 (CN)
(74) Representative: Körber, Martin Hans
(86) International application number: PCT/CN2006/002800
(87) International publication number: WO 2007/056926

(56) References cited:
- WO-A-00/38439
- CN-A- 1 642 054
- CN-A- 1 674 706
- GB-A- 2 281 676
- JP-A- 02 119 327
- 3RD GENERATION PARTNERSHIP PROJECT: "3GPP TS 43.068 v7.1.0; 3rd Generation Partnership Project; Technical Specification Group Core Network and Terminals; Voice Group Call Service (VGCS); Stage 2 (Release 7)" 3RD GENERATION PARTNERSHIP PROJECT (3GPP); TECHNICAL SPECIFICATION (TS), XX, XX, vol. 43.068, no. V710, September 2005 (2005-09), pages 1-109, XP002416094
- HUAWEI: "Assignment from dedicated signalling channel to group call channel" 3GPP TSG CT WG1 #45, C1-070212, [Online] 5 February 2007 (2007-02-05), - 9 February 2007 (2007-02-09) pages 1-36, XP002464098 Retrieved from the Internet: URL:http://www.3gpp.org/ftp/tsg_CT/WG1_mm- cc-sm_ex-CN1/TSGC1_45/Docs/> [retrieved on 2008-04-10]
- HUAWEI: "Assignment from dedicated signalling channel to broadcast call channel" 3GPP TSG CT WG1 #45, C1-070213, [Online] 5 February 2007 (2007-02-05), - 9 February 2007 (2007-02-09) pages 1-29, XP002464099 Retrieved from the Internet: URL:http://www.3gpp.org/ftp/tsg_CT/WG1_mm- cc-sm_ex-CN1/TSGC1_45/Docs/> [retrieved on 2008-04-10]

## Description

### Field of the Technology

The present invention relates to trunking communication technologies, and particularly, to methods and systems for providing group call service or broadcast service.

### Background of the Invention

In a conventional mobile communication system, when a mobile station initiates a group call or broadcast call, the network side, while establishing a group call control link, assigns the initiator to a dedicated Traffic Channel (TCH) to .talk on the TCH. In the case of group call, when initiator release uplink on the dedicated TCH, the network side further assigns the initiator of the group call to a group call channel and releases the dedicated TCH. In the case of broadcast call, the initiator always talks on the dedicated TCH during the call.

To initiate a group call, two TCHs are used in the home cell of the initiator. The two TCHs include a dedicated TCH occupied by the initiator and a group call channel for the cell. For a broadcast call, in the home cell of the talker, two TCHs are always used during the call process. The two TCHs include a dedicated TCH occupied by the talker and a group call channel for the cell. Obviously, such technical schemes waste radio channel resources.

In the initiation process of a group call, a group call control connection is established between a Base Station Controller (BSC) and a Mobile Switching Center (MSC) while a dedicated connection is established for the mobile station of the initiator, and the two connections are established independently of each other.

In the Voice Group Call Service (VGCS), when the initiator of the group call has been successfully assigned to the dedicated TCH, the initiator first talks on the dedicated TCH, and after some time, e.g., 5 seconds, releases the uplink automatically; the network side then switches the initiator to the group call channel as a listener to listen on the downlink. In the Voice Broadcast Service (VBS), the talker will remain as a talker on the dedicated TCH, and can only be switched to another dedicated TCH even when handover is necessary.

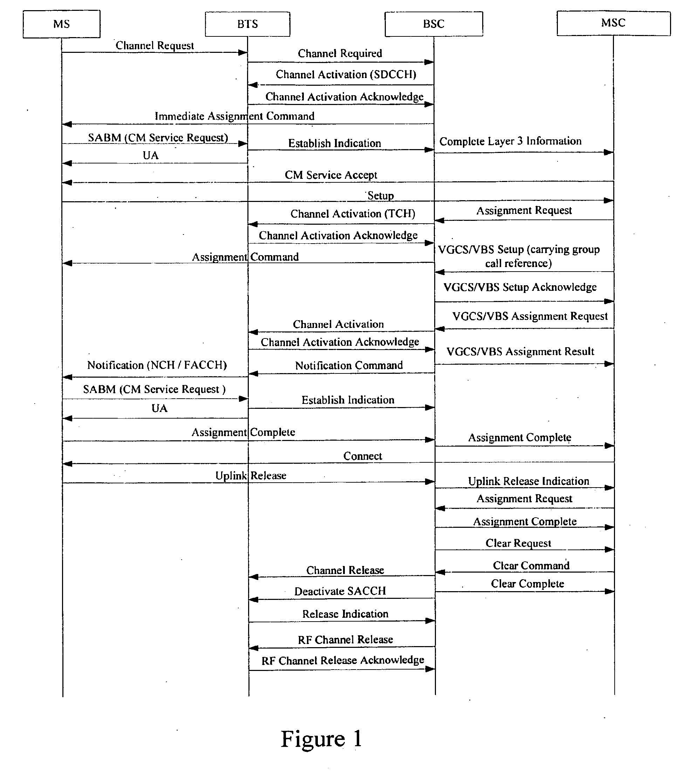

Figure 1 shows a standard VGCS initiation process, two TCHs are used for the initiation of the VGCS in the home cell of the initiator. For VBS, the initiator always occupies the dedicated channel during the whole call process, and no uplink release process is performed, therefore the standard VBS initiation process ends at the "Connect" message in Figure 1, and two TCHs are always used in the home cell of the talker even when handover occurs. Radio channel resources are wasted.

A solution is given by a UK patent application GB 2 281 676 A. After a group call is set-up to a group, when a first called group member responds, it is allocated a SDCCH and is added to the group. If additional group members respond later they are added to the group in a similar fashion. If a PTT button on the MS is pressed, the PTT command is sent to the MSC, the MSC allocates the up-link TCH to the MS; and the MS moves from the SDCCH to the TCH. When the PTT button is released, the up-link TCH is released, the broadcast is stopped and the MS is returned to the SDCCH. In this solution, each MS in the group is allocated a SDCCH, and the SDCCH is not released in the whole process of group call.

### Summary of the Invention

The present invention provides methods and systems for providing group call service, in which only one TCH is used to initiate a group call, and the problem of channel waste in the standard VGCS initiation process is solved.

A method for providing group call service, includes: assigning a Stand-alone Dedicated Control Channel (SDCCH) for a Mobile Station (MS); establishing a group call control connection in response to receiving a group call request sent by the MS through the SDCCH; establishing a group call channel for each cell in group call area; assigning the MS to the group call channel from the SDCCH, and releasing the SDCCH.

The group call channel may be establishing by activating the downlink of the group call channel.

The activating the downlink of the group call channel includes: sending, by a Mobile Switching Center (MSC), a VGCS Assignment Request message to a Base Station Controller (BSC); sending, by the BSC, a Channel Activation message to a Base Transceiver Station (BTS); activating, by the BTS, the downlink of the group call channel, and sending a Channel Activation Acknowledge message to the BSC; and returning, by the BSC, to the MSC a VGCS Assignment Result message indicating that the group call channel is assigned successfully.

The method further includes: sending, by the BSC, a Notification Command via a notification channel (NCH) and a Fast Associated Control Channel (FACCH) to instruct other MSs to enter the group channel in response to activating the downlink of the group call channel.

The method further includes: activating the uplink of the group call channel before assigning the MS to the group call channel from the SDCCH.

The activating the uplink of the group call channel and assigning the MS to the group call channel from the SDCCH includes: sending, by the MSC, an Assignment Request message to the BSC to assign the MS to the group call channel from the SDCCH; sending, by the BSC, a Channel Activation message to a BTS; activating, by the BTS, the uplink of the group call channel and sending a Channel Activation Acknowledge message to the BSC; and sending, by the BSC, an Assignment Command message to notify the MS to switch from the SDCCH to the group call channel.

The method further includes: releasing the uplink of the group call channel.

A method for providing broadcast service includes: assigning an SDCCH for an MS; establishing a broadcast control connection in response to receiving a broadcast request sent by the MS through the SDCCH; establishing a broadcast channel for each cell in broadcast area; assigning the MS to the broadcast channel from the SDCCH; and releasing the SDCCH.

The broadcast channel may be established by activating the downlink of the broadcast channel.

The activating the downlink of the broadcast channel includes: sending, by an MSC, a VBS Assignment Request message to a BSC; sending, by the BSC, a Channel Activation message to a BTS; activating, by the BTS, the downlink of the broadcast channel, and sending a Channel Activation Acknowledge message to the BSC; and returning, by the BSC, to the MSC a VBS Assignment Result message indicating that the broadcast channel is assigned successfully.

The method further includes: sending, by the BSC, a Notification Command via an NCH and a FACCH to instruct other MSs to enter the group channel in response to activating the downlink of the broadcast channel.

The method further includes: activating the uplink of the broadcast channel before assigning the MS to the broadcast channel from the SDCCH.

The activating the uplink of the broadcast channel and assigning the MS to the broadcast channel from the SDCCH includes: sending, by the MSC, an Assignment Request message to the BSC to assign the MS to the broadcast channel from the SDCCH; sending, by the BSC, a Channel Activation message to a BTS; activating, by the BTS, the uplink of the broadcast channel and sending a Channel Activation Acknowledge message to the BSC; and sending, by the BSC, an Assignment Command message to notify the MS to switch from the SDCCH to the broadcast channel.

An MSC device includes: a first unit adapted to establish a group call control connection with a BSC in response to receiving a group call request from a MS through a SDCCH; a second unit adapted to send a VGCS Assignment Request message to the BSC to establish a group call channel; a third unit adapted to send an Assignment Request message to the BSC to assign the MS to the group call channel from the SDCCH; and a fourth unit adapted to send a Clear Command to the BSC to releasing the SDCCH.

An MSC device includes: a first unit adapted to establish a broadcast control connection with a BSC in response to receiving a broadcast request from a MS through an SDCCH; a second unit adapted to send a VBS Assignment Request message to the BSC to establish a broadcast channel; a third unit adapted to send an Assignment Request message to the BSC to assign the MS to the broadcast channel from the SDCCH; and a fourth unit adapted to send a Clear Command to the BSC to releasing the SDCCH.

A BSC device includes: a first unit adapted to send a first Channel Activation message to a BTS to activate the downlink of a group call channel in response to receiving a VGCS Assignment Request message sent by a Mobile Switching Center (MSC); a second unit adapted to send a second Channel Activation message to the BTS to activate the uplink of a group call channel in response to receiving an Assignment Request message sent by the MSC; and a third unit adapted to send a Deactivate SACCH of the SDCCH to release the SDCCH.

A BSC device includes: a first unit adapted to send a first Channel Activation message to a BTS to activate the downlink of a broadcast channel in response to receiving a VGCS Assignment Request message sent by an MSC; a second unit adapted to send a second Channel Activation message to the BTS to activate the uplink of a broadcast channel in response to receiving an Assignment Request message sent by the MSC; and a third unit adapted to send a Deactivate SACCH of the SDCCH to release the SDCCH.

It can be seen from the technical scheme above that a single TCH is employed to initiate group call service, therefore in the group call initiation process, the home cell of the initiator needs only one TCH as the group call channel, no extra TCH is needed for the initiator. In this way the channel waste in the standard VGCS initiation process is solved.

### Brief Description of the Drawings

Figure 1 is a simplified flow chart illustrating the conventional group call initiation process.
Figure 2 is a simplified flow chart illustrating the group call initiation process in an embodiment of the present invention.
Figure 3 is a simplified schematic illustrating the system modules in an embodiment of the present invention.

### Detailed Description of the Invention

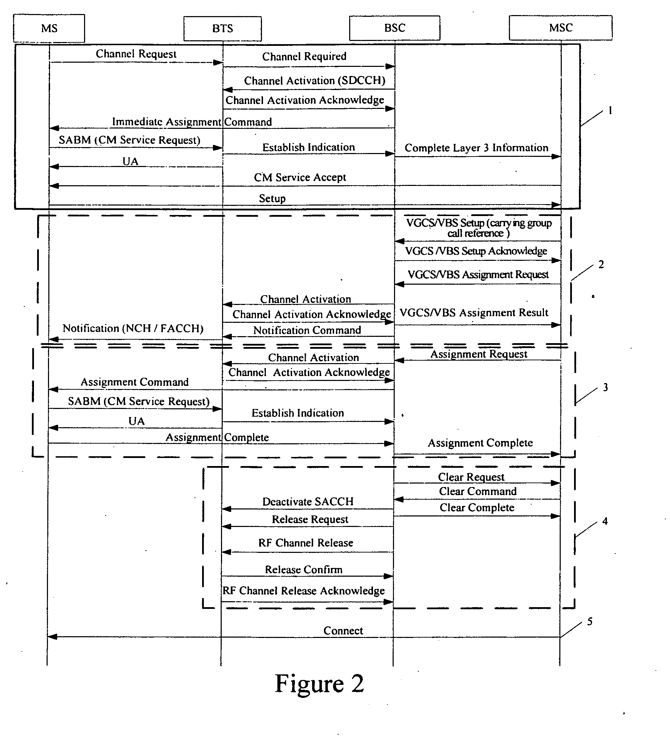

In an embodiment of the present invention, a method for providing group call service is demonstrated, as shown in Figure 2. In this embodiment, the group call service is taken as an example, and the method is also applicable for broadcast service. This embodiment is described in details as follows.

Block 1: A Base Station Controller (BSC) assigns a Stand-alone Dedicated Control Channel (SDCCH) for a Mobile Station (MS), the MS accesses the network and sends a group call request.

Before sending the group call request, the MS first sends a Channel Request message to the Base Transceiver Station (BTS) to assign an SDCCH. The BTS sends a Channel Required message to the BSC, the BSC activates an SDCCH for the MS, after confirming that the channel activation succeeds, the BTS sends a Channel Activation Acknowledge message to the BSC. The BSC sends an Immediate Assignment Command message to the MS to assign the MS immediately to the activated SDCCH. After the channel assignment, the MS establishes on the SDCCH and sends an SABM (Set Asynchronous Balanced Mode, CM (Call Management) Service Request) message, the SABM message includes group call Establish Request contents. The Mobile Switching Center (MSC) accordingly performs validity verification and then sends a CM Service Accept message to the MS if the MS is verified to be valid.

For broadcast service, the group call request and the group call Establish Request in this embodiment should be replaced by a broadcast request and broadcast Establish Request respectively.

Block 2: The network side establishes a group call control connection for each BSC and establishes a group call channel for every cell in group call area.

Upon receiving the group call Establish Request, the MSC sends a VGCS Setup message to the BSC to establish a group call control connection for uplink management; the BSC finishes corresponding operations and returns a VGCS Setup Acknowledge message to the MSC. Upon receiving the VGCS Setup Acknowledge message, the MSC sends the BSC a VGCS Assignment Request message to every cell in group call area. The BSC sends a Channel Activation message to the BTS to activate the downlink of the group call channel in each cell; after completing the activation, the BTS returns a Channel Activation Acknowledge message to the BSC. The BSC returns the MSC a VGCS Assignment Result message indicating the channel in the cell is assigned successfully and sends a Notification Command message on Notification Channel (NCH) and Fast Associated Control Channel (FACCH) to instruct other call initiators in the cells to enter the group call channel.

For broadcast service, the group call control connection, the call channel and the group call area in this embodiment should be replaced by a broadcast control connection, broadcast channel and broadcast area respectively. The VGCS Setup message, VGCS Setup Acknowledge message, VGCS Assignment Request message, VGCS Assignment Result message in this embodiment should be replaced by a VBS Setup message, VBS Setup Acknowledge message, VBS Assignment Request message, VBS Assignment Result message respectively.

Block 3: Assign the initiator MS to the group call channel.

Upon receiving the VGCS Assignment Result message, the MSC sends an Assignment Request message to the BSC to assign the initiator MS to the group call channel from the SDCCH, the BSC then sends a Channel Activation message to the BTS to activate the uplink of the group call channel. The BTS returns a Channel Activation Acknowledge message to the BSC after the uplink of the group call channel is successfully activated. The BSC sends an Assignment Command message to notify the MS to switch from the SDCCH to the group call channel; after successfully establishing on the group call channel, the MS sends an Assignment Complete message to the BSC which then sends the Assignment Complete message to report to the MSC that the assignment is successful.

In the assignment process, the initiator is assigned to the group call channel as a talker and may talk after establishing on the group call channel.

Similarly, for broadcast service, the group call channel in block 3 should be replaced by the broadcast channel.

Block 4: Release the SDCCH resource occupied by the initiator MS.

The BSC sends a Clear Request message to the MSC to release a connection corresponding to the SDCCH occupied by the MS. Upon receiving the Clear Request message, the MSC sends a Clear Command message to the BSC to clear the connection corresponding to the SDCCH. The BSC sends a Clear Complete message to the MSC to release A-interface connection. The BSC sends a Deactivate SACCH message to the BTS to deactivate the Slow Associated Control Channel (SACCH) of the SDCCH, then the BTS, releases the SDCCH and a radio frequency channel, the radio frequency channel is the physical channel corresponding to the SDCCH, upon completing the release, the BTS sends a Release Confirm and RF Channel Release Acknowledge to the BSC.

Block 5: The MSC sends a Connect message to the initiator so that the MS can talk on the group call channel, thus the group call service initiation process is completed.

For broadcast service, the MS talks on the broadcast channel, and the broadcast service initiation process is completed.

Some time, e.g., 5 seconds, after the initiation of the group call service based on the single channel, the MS reports an uplink release message on the group call channel to release the uplink. In the case of broadcast service, the talker will not release the uplink, instead, the talker will always occupies the uplink on the group call channel during the call.

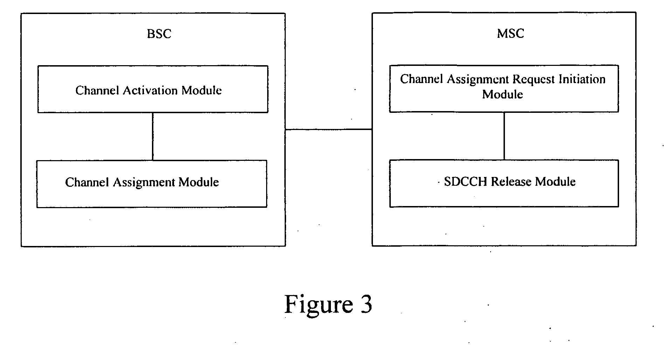

An embodiment of the present invention demonstrates a system for providing group call service, the module diagram of which is shown in Figure 3. The system includes a BSC and an MSC. The MSC includes:
a channel assignment request sending module, configured to send an Assignment Request message upon the establishment of a group call or broadcast channel; and
an SDCCH release module, configured to control the release of the SDCCH, for example, release the SDCCH after the MS has been assigned to the group call channel from the SDCCH.

The BSC includes:
a channel activation module, configured to activate the group call channel upon receiving the Assignment Request message, and
a channel assignment module, configured to assign the group call initiator MS to the group call channel from the SDCCH upon receiving the Assignment Request message.

To sum up, according to the embodiments of the present invention, a single channel is employed to initiate group call service, therefore in the group call initiation process the home cell of the initiator needs only one TCH as the group call channel, no extra TCH is needed for the initiator. In this way the channel waste in the standard VGCS initiation process is solved.

The foregoing is only preferred embodiments of the present invention. The protection scope of the present invention, however, is not limited to the above description. Any alteration or substitution that is within the technical scope disclosed by the present invention and can easily occur to those skilled in the art should be covered in the protection scope of the present invention. Hence the protection scope of the present invention should be determined by the statements in claims.

## Claims

1. A method for providing group call service, **characterized by** comprising:
assigning (1) a Stand-alone Dedicated Control Channel, SDCCH, for a Mobile Station (MS);
establishing (1) a group call control connection in response to receiving a group call request sent by the MS through the SDCCH;
establishing (2) a group call channel for each cell in group call area;
assigning(3) the MS to the group call channel from the SDCCH; and
releasing (4) the SDCCH.

2. The method of claim 1, wherein establishing the group call channel by activating the downlink of the group call channel.

3. The method of claim 2, wherein activating the downlink of the group call channel comprises:
sending, by a Mobile Switching Center, MSC, a VGCS Assignment Request message to a Base Station Controller, BSC;
sending, by the BSC, a Channel Activation message to a Base Transceiver Station, BTS;
activating, by the BTS, the downlink of the group call channel, and sending a Channel Activation Acknowledge message to the BSC; and
returning, by the BSC, to the MSC a VGCS Assignment Result message indicating that the group call channel is assigned successfully.

4. The method of claim 3, further comprising:
sending, by the BSC, a Notification Command via a notification channel, NCH, and a Fast Associated Control Channel, FACCH, to instruct other MSs to enter the group channel in response to activating the downlink of the group call channel.

5. The method of claim 1, further comprising:
activating the uplink of the group call channel before assigning the MS to the group call channel from the SDCCH.

6. The method of claim 5, wherein activating the uplink of the group call channel and assigning the MS to the group call channel from the SDCCH comprises:
sending, by the MSC, an Assignment Request message to the BSC to assign the MS to the group call channel from the SDCCH;
sending, by the BSC, a Channel Activation message to a BTS;
activating, by the BTS, the uplink of the group call channel and sending a Channel Activation Acknowledge message to the BSC; and
sending, by the BSC, an Assignment Command message to notify the MS to switch from the SDCCH to the group call channel.

7. The method of claim 6, further comprising:
releasing the uplink of the group call channel.

8. A method for providing broadcast service, **characterized by** comprising:
assigning (1) a Stand-alone Dedicated Control Channel, SDCCH, for a Mobile Station, MS,
establishing (1) a broadcast control connection in response to receiving a broadcast request sent by the MS through the SDCCH;
establishing (2) a broadcast channel for each cell in broadcast area;
assigning (3) the MS to the broadcast channel from the SDCCH; and
releasing (4) the SDCCH.

9. The method of claim 8, wherein establishing the broadcast channel by activating the downlink of the broadcast channel.

10. The method of claim 9, wherein activating the downlink of the broadcast channel comprises:
sending, by a Mobile Switching Center, MSC, a VBS Assignment Request message to a Base Station Controller, BSC;
sending, by the BSC, a Channel Activation message to a Base Transceiver Station, BTS,
activating, by the BTS, the downlink of the broadcast channel, and sending a Channel Activation Acknowledge message to the BSC; and
returning, by the BSC, to the MSC a VBS Assignment Result message indicating that the broadcast channel is assigned successfully.

11. The method of claim 10, further comprising:
sending, by the BSC, a Notification Command via a Notification Channel, NCH, and a Fast Associated Control Channel, FACCH, to instruct other MSs to enter the group channel in response to activating the downlink of the broadcast channel.

12. The method of claim 8, further comprising:
activating the uplink of the broadcast channel before assigning the MS to the broadcast channel from the SDCCH.

13. The method of claim 12, wherein activating the uplink of the broadcast channel and assigning the MS to the broadcast channel from the SDCCH comprises:
sending, by the MSC, an Assignment Request message to the BSC to assign the MS to the broadcast channel from the SDCCH;
sending, by the BSC, a Channel Activation message to a BTS;
activating, by the BTS, the uplink of the broadcast channel and sending a Channel Activation Acknowledge message to the BSC; and
sending, by the BSC, an Assignment Command message to notify the MS to switch from the SDCCH to the broadcast channel.

14. A Mobile Switching Center, MSC, device, **characterized by** comprising:
a first unit adapted to establish a group call control connection with a Base Station Controller, BSC, in response to receiving a group call request from a Mobile Station, MS, through a Stand-alone Dedicated Control Channel, DCCH,
a second unit adapted to send a VGCS Assignment Request message to the BSC to establish a group call channel;
a third unit adapted to send an Assignment Request message to the BSC to assign the MS to the group call channel from the SDCCH; and
a fourth unit adapted to send a Clear Command to the BSC to releasing the SDCCH.

15. A Mobile Switching Center, MSC, device, **characterized by** comprising:
a first unit adapted to establish a broadcast control connection with a Base Station Controller, BSC, in response to receiving a broadcast request from a Mobile Station, MS, through a Stand-alone Dedicated Control Channel, SDCCH;
a second unit adapted to send a VBS Assignment Request message to the BSC to establish a broadcast channel;
a third unit adapted to send an Assignment Request message to the BSC to assign the MS to the broadcast channel from the SDCCH; and
a fourth unit adapted to send a Clear Command to the BSC to releasing the SDCCH.

16. A Base Station Controller, BSC, device, **characterized by** comprising:
a first unit adapted to send a first Channel Activation message to a Base Transceiver Station, BTS, to activate the downlink of a group call channel in response to receiving a VGCS Assignment Request message sent by a Mobile Switching Center, MSC;
a second unit adapted to send a second Channel Activation message to the BTS to activate the uplink of a group call channel in response to receiving an Assignment Request message sent by the MSC; and
a third unit adapted to send a Deactivate Slow Associated Control Channel, SACCH of the SDCCH to release the SDCCH.

17. A Base Station Controller, BSC, device, **characterized by** comprising:
a first unit adapted to send a first Channel Activation message to a Base Transceiver Station, BTS, to activate the downlink of a broadcast channel in response to receiving a VGCS Assignment Request message sent by a Mobile Switching Center, MSC;
a second unit adapted to send a second Channel Activation message to the BTS to activate the uplink of a broadcast channel in response to receiving an Assignment Request message sent by the MSC; and
a third unit adapted to send a Deactivate Slow Associated Control Channel, SACCH, of the SDCCH to release the SDCCH.

## Patentansprüche

1. Verfahren zur Bereitstellung eines Gruppenrufdienstes, **dadurch gekennzeichnet, dass** es umfasst:
Zuweisen (1) eines Stand-alone Dedicated Control Channels, SDCCH, zu einer Mobilstation (MS);
Aufbauen (1) einer Gruppenruf-Steuerungsverbindung in Erwiderung auf das Empfangen einer Gruppenrufanfrage, die durch die MS durch den SDCCH gesendet wurde;
Aufbauen (2) eines Gruppenruflcanals für jede Zelle in einem Gruppenrufbereich;
Zuweisen (3) der MS an den Gruppenrufkanal von dem SDCCH; und Freigeben (4) des SDCCH.

2. Verfahren nach Anspruch 1, wobei das Aufbauen des Gruppenrufkanals durch Aktivieren des Downlinks des Gruppenrufkanals erfolgt.

3. Verfahren nach Anspruch 2, wobei das Aktivieren des Downlinks des Gruppenrufkanals umfasst:
Senden einer VGCS-Zuordnungsanfragemeldung durch ein Mobile-Switching-Center, MSC, an einen Basisstationscontroller, BSC;
Senden einer Kanalaktivierungsmeldung durch den BSC an eine Basis-Transceiver-Station, BTS;
Aktivieren des Downlinks des Gruppenrufkanals durch die BTS, und Senden einer Kanalaktivierungsbestätigungsmeldung an den BSC; und
Zurücksenden einer VGCS-Zuweisungsergebnismeldung durch den BSC an das MSC, die anzeigt, dass der Gruppenrufkanal erfolgreich zugewiesen wurde.

4. Verfahren nach Anspruch 3, ferner umfassend:
Senden eines Notifikationsbefehls durch den BSC über einen Notifikationskanal NCH, und einen Fast-Associated-Control-Channel FACCH, um andere Mobilstationen anzuweisen, an dem Gruppenkanal in Erwiderung auf die Aktivierung des Downlinks des Gruppenrufkanals teilzunehmen.

5. Verfahren nach Anspruch 1, ferner umfassend:
Aktivieren des Uplinks des Gruppenrufkanals, bevor die MS von dem SDCCH dem Gruppenrufkanal zugewiesen wird.

6. Verfahren nach Anspruch 5, wobei das Aktivieren des Uplinks des Gruppenrufkanals und das Zuweisen der MS zu dem Gruppenrufkanal von dem SDCCH umfasst: Senden einer Überweisungsanfragemeldung durch den MSC an den BSC, um die MS von dem SDCCH dem Gruppenrufkanal zuzuweisen; Senden einer Kanalaktivierungsmeldung durch den BSC an die BTS; Aktivieren des Uplinks des Gruppenrufkanals durch die BTS und Senden einer Kanalaktivierungsbestätigungsmeldung an den BSC; und Senden einer Zuweisungsbefehlmeldung durch den BSC, um die MS zu benachrichtigen, dass von dem SDCCH zu dem Gruppenrufkanal umzuschalten ist.

7. Verfahren nach Anspruch 6, ferner umfassend:
Freigeben des Uplinks des Gruppenrufkanals.

8. Verfahren zur Bereitstellung eines Sendedienstes, **dadurch gekennzeichnet, dass** es umfasst:
Zuweisen (1) eines Stand-Alone-Dedicated-Control-Channels, SDCCH, zu einer Mobilstation, MS;
Aufbauen (1) einer Sendesteuerungsverbindung in Erwiderung auf das Empfangen einer Sendeanfrage, die durch die MS über den SDCCH gesendet wurde;
Aufbauen (2) eines Sendekanals für jede Zelle in dem Sendebereich;
Zuweisen (3) der MS von dem SDCCH zu dem Sendekanal; und
Freigeben (4) des SDCCH.

9. Verfahren nach Anspruch 8, wobei das Aufbauen des Sendekanals durch Aktivieren des Downlinks des Sendekanals erfolgt.

10. Verfahren nach Anspruch 9, wobei das Aktivieren des Downlinks des Sendekanals umfasst:
Senden einer VBS-Zuweisungsanfragemeldung durch ein MobileSwitching-Center, MSC, an einen Basisstationscontroller, BSC;
Senden einer Kanalaktivierungsmeldung durch den BSC an eine Basis-Transceiver-Station, BTS;
Aktivieren des Downlinks des Sendekanals durch die BTS und Senden einer Kanalaktivierungsbestätigungsmeldung an den BSC; und
Zurücksenden einer VBS-Zuweisungsergebnismeldung durch den BSC an den MSC, die anzeigt, dass der Sendekanal erfolgreich zugewiesen wurde.

11. Verfahren nach Anspruch 10, ferner umfassend:
Senden eines Notifikationsbefehls über einen Notifikationskanal, NCH, und einen Fast-Associated-Control-Channel, FACCH, um die anderen Mobilstationen anzuweisen, an dem Gruppenkanal in Erwiderung auf die Aktivierung des Downlinks des Sendekanals teilzunehmen.

12. Verfahren nach Anspruch 8, ferner umfassend:
Aktivieren des Uplinks des Sendekanals, bevor die MS von dem SDCCH zu dem Sendekanal zugewiesen wird.

13. Verfahren nach Anspruch 12, wobei das Aktivieren des Uplinks des Sendekanals und das Zuweisen der MS von dem SDCCH zu dem Sendekanal umfasst:
Senden einer Zuweisungsanfragemeldung durch den MSC an den BSC, um die MS von dem SDCCH zu dem Sendekanal zuzuweisen;
Senden einer Kanalaktivierungsmeldung durch den BSC an eine BTS;
Aktivieren des Uplinks des Sendekanals durch die BTS und Senden einer Kanalaktivierungsbestätigungsmeldung an den BSC; und
Senden einer Zuweisungsbefehlmeldung durch den BSC, um die MS zu benachrichtigen, dass von dem SDCCH zu dem Gruppenrufkanal umzuschalten ist.

14. Mobile-Switching-Center-Vorrichtung, MSC-Vorrichtung, **dadurch gekennzeichnet, dass** sie umfasst:
eine erste Einheit, die geeignet ist, eine Gruppenrufsteuerungsverbindung mit einem Basisstationscontroller BSC, in Erwiderung auf das Empfangen einer Gruppenrufanfrage von einer Mobilstation MS, über einen Stand-Alone-Dedicated-Control-Channel, SDCCH, aufzubauen;
eine zweite Einheit, die geeignet ist, eine VGCS-Zuweisungsanfragemeldung an den BSC zu senden, um einen Gruppenrufkanal aufzubauen;
eine dritte Einheit, die geeignet ist, eine Zuweisungsanfragemeldung an den BSC zu senden, um die MS von dem SDCCH dem Gruppenrufkanal zuzuweisen; und
eine vierte Einheit, die geeignet ist, einen Freigabebefehl an den BSC zu senden, um den SDCCH freizugeben.

15. Mobile-Switching-Center-Vorrichtung, MSC-Vorrichtung, **dadurch gekennzeichnet, dass** sie umfasst:
eine erste Einheit, die geeignet ist, eine Sendesteuerungsverbindung mit einem Basisstationscontroller, BSC, in Erwiderung auf das Empfangen einer Sendeanfrage von einer Mobilstation, MS, über einen Stand-Alone-Dedicated-Control-Channel, SDCCH, aufzubauen;
eine zweite Einheit, die geeignet ist, eine VBS-Zuweisungsanfragemeldung an den BSC zu senden, um einen Sendekanal aufzubauen;
eine dritte Einheit, die geeignet ist, eine Zuweisungsanfragemeldung an den BSC zu senden, um die MS von dem SDCCH dem Sendekanal zuzuweisen; und
eine vierte Einheit, die geeignet ist, einen Freigabebefehl an den BSC zu senden, um den SDCCH freizugeben.

16. Basisstationscontroller-Vorrichtung, BSC-Vorrichtung, **dadurch gekennzeichnet, dass** sie umfasst:
eine erste Einheit, die geeignet ist, eine erste Kanalaktivierungsmeldung an eine Basis-Transceiver-Station, BTS, zu senden, um den Downlink eines Sendekanals in Erwiderung auf das Empfangen einer VGCS-Zuweisungsanfragemeldung zu aktivieren, die von einem Mobile-Switching-Center, MSC, gesendet wurde;
eine zweite Einheit, die geeignet ist, eine zweite Kanalaktivierungsmeldung an die BTS zu senden, um den Uplink eines Sendekanals in Erwiderung auf das Empfangen einer Zuweisungsanfragemeldung zu aktivieren, die von dem MSC gesendet wurde; und
eine dritte Einheit, die geeignet ist, einen Deactivate-Slow-Associated-Control-Channel, SACCH, des SDCCH zu senden, um den SDCCH frei zu geben.

17. Basisstationscontroller-Vorrichtung, BSC-Vorrichtung, **dadurch gekennzeichnet, dass** sie umfasst:
eine erste Einheit, die geeignet ist, eine erste Kanalaktivierungsmeldung an eine Basis-Transceiver-Station, BTS, zu senden, um den Downlink eines Sendekanals in Erwiderung auf das Empfangen einer VGCS-Zuweisungsanfragemeldung zu aktivieren, die von einem Mobile-Switching-Center, MSC, gesendet wurde;
eine zweite Einheit, die geeignet ist, eine zweite Kanalaktivierungsmeldung an die BTS zu senden, um den Uplink eines Sendekanals in Erwiderung auf das Empfangen einer Zuweisungsanfragemeldung zu aktivieren, die von dem MSC gesendet wurde; und
eine dritte Einheit, die geeignet ist, einen Deactivate-Slow-Associated-Control-Channel, SACCH, des SDCCH zu senden, um den SDCCH frei zu geben.

## Revendications

1. Procédé pour fournir un service d'appel de groupe, **caractérisé en ce qu'**il comprend les étapes consistant à:
attribuer (1) un canal de commande dédié autonome, SDCCH, à une station mobile (MS);
établir (1) une connexion de commande d'appel de groupe en réponse à la réception d'une demande d'appel de groupe envoyée par la MS par l'intermédiaire du canal SDCCH;
établir (2) un canal d'appel de groupe pour chaque cellule dans une zone d'appel de groupe;
attribuer (3) la MS du canal SDCCH au canal d'appel de groupe; et
libérer (4) le canal SDCCH.

2. Procédé selon la revendication 1, comprenant l'établissement du canal d'appel de groupe par l'activation de la liaison descendante du canal d'appel de groupe.

3. Procédé selon la revendication 2, dans lequel l'activation de la liaison descendante du canal d'appel de groupe comprend les étapes consistant à:
envoyer, par un commutateur de service mobile, MSC, un message de demande d'attribution de VGCS à un contrôleur de stations de base, BSC;
envoyer, par le BSC, un message d'activation de canal à une station émettrice-réceptrice de base, BTS;
activer, par la BTS, la liaison descendante du canal d'appel de groupe, et envoyer un message d'acquittement d'activation de canal au BSC; et
renvoyer, par le BSC, au MSC, un message de résultat d'attribution de. VGCS indiquant que le canal d'appel de groupe a été attribué avec succès.

4. Procédé selon la revendication 3, comprenant en outre l'étape consistant à:
envoyer, par le BSC, une commande de notification par l'intermédiaire d'un canal de notification, NCH, et d'un canal de commande associé rapide, FACCH, pour ordonner à d'autres MS d'entrer dans le canal de groupe en réponse à l'activation de la liaison descendante du canal d'appel de groupe.

5. Procédé selon la revendication 1, comprenant en outre l'étape consistant à:
activer la liaison montante du canal d'appel de groupe avant d'attribuer la MS du canal SDCCH au canal d'appel de groupe.

6. Procédé selon la revendication 5, dans lequel l'activation de la liaison montante du canal d'appel de groupe et l'attribution de la MS du canal SDCCH au canal d'appel de groupe comprennent les étapes consistant à:
envoyer, par le MSC, au BSC, un message de demande d'attribution pour attribuer la MS du canal SDCCH au canal d'appel de groupe;
envoyer, par le BSC, un message d'activation de canal à une BTS;
activer, par la BTS, la liaison montante du canal d'appel de groupe et envoyer un message d'acquittement d'activation de canal au BSC; et
envoyer, par le BSC, un message de commande d'attribution pour notifier à la MS de commuter du canal SDCCH vers le canal d'appel de groupe.

7. Procédé selon la revendication 6, comprenant en outre l'étape consistant à:
libérer la liaison montante du canal d'appel de groupe.

8. Procédé pour fournir un service de diffusion, **caractérisé en ce qu'**il comprend les étapes consistant à:
attribuer (1) un canal de commande dédié autonome, SDCCH, à une station mobile, MS;
établir (1) une connexion de commande de diffusion en réponse à la réception d'une demande de diffusion envoyée par la MS par l'intermédiaire du canal SDCCH;
établir (2) un canal de diffusion pour chaque cellule dans une zone de diffusion;
attribuer (3) la MS du canal SDCCH au canal de diffusion; et
libérer (4) le canal SDCCH.

9. Procédé selon la revendication 8, comprenant l'établissement du canal de diffusion par l'activation de la liaison descendante du canal de diffusion.

10. Procédé selon la revendication 9, dans lequel l'activation de la liaison descendante du canal de diffusion comprend les étapes consistant à:
envoyer, par un commutateur de service mobile, MSC, un message de demande d'attribution de VBS à un contrôleur de stations de base, BSC;
envoyer, par le BSC, un message d'activation de canal à une station émettrice-réceptrice de base, BTS;
activer, par la BTS, la liaison descendante du canal de diffusion, et envoyer un message d'acquittement d'activation de canal au BSC; et
renvoyer, par le BSC, au commutateur MSC, un message de résultat d'attribution de VBS indiquant que le canal de diffusion a été attribué avec succès.

11. Procédé selon la revendication 10, comprenant en outre l'étape consistant à:
envoyer, par le BSC, une commande de notification par l'intermédiaire d'un canal de notification, NCH, et d'un canal de commande associé rapide, FACCH, pour ordonner à d'autres MS d'entrer dans le canal de groupe en réponse à l'activation de la liaison descendante du canal de diffusion.

12. Procédé selon la revendication 8, comprenant en outre l'étape consistant à:
activer la liaison montante du canal de diffusion avant d'attribuer la MS du canal SDCCH au canal de diffusion.

13. Procédé selon la revendication 12, dans lequel l'activation de la liaison montante du canal de diffusion et l'attribution de la MS du canal SDCCH au canal de diffusion comprennent les étapes consistant à:
envoyer, par le MSC, au BSC, un message de demande d'attribution pour attribuer la MS du canal SDCCH au canal de diffusion;
envoyer, par le BSC, un message d'activation de canal à une BTS;
activer, par la BTS, la liaison montante du canal de diffusion et envoyer un message d'acquittement d'activation de canal au BSC; et
envoyer, par le BSC, un message de commande d'attribution pour notifier à la MS de commuter du canal SDCCH vers le canal de diffusion.

14. Dispositif de commutateur de service mobile, MSC, **caractérisé en ce qu'**il comprend:
une première unité adaptée pour établir une connexion de commande d'appel de groupe avec un contrôleur de stations de base, BSC, en réponse à la réception d'une demande d'appel de groupe d'une station mobile, MS, par l'intermédiaire d'un canal de commande dédié autonome, SDCCH;
une deuxième unité adaptée pour envoyer un message de demande d'attribution de VGCS au BSC pour établir un canal d'appel de groupe;
une troisième unité adaptée pour envoyer un message de demande d'attribution au BSC pour attribuer la MS du canal SDCCH au canal d'appel de groupe; et
une quatrième unité adaptée pour envoyer une commande de libération au BSC pour libérer le canal SDCCH.

15. Dispositif de commutateur de service mobile, MSC, **caractérisé en ce qu'**il comprend:
une première unité adaptée pour établir une connexion de commande de diffusion avec un contrôleur de stations de base, BSC, en réponse à la réception d'une demande de diffusion provenant d'une station mobile, MS, par l'intermédiaire d'un canal de commande dédié autonome, SDCCH;
une deuxième unité adaptée pour envoyer un message de demande d'attribution de VBS au BSC pour établir un canal de diffusion;
une troisième unité adaptée pour envoyer un message de demande d'attribution au BSC pour attribuer la MS du canal SDCCH au canal de diffusion; et
une quatrième unité adaptée pour envoyer une commande de libération au BSC pour libérer le canal SDCCH.

16. Dispositif de contrôleur de stations de base, BSC, **caractérisé en ce qu'**il comprend:
une première unité adaptée pour envoyer un premier message d'activation de canal à une station émettrice-réceptrice de base, BTS, pour activer la liaison descendante d'un canal d'appel de groupe en réponse à la réception d'un message de demande d'attribution de VGCS envoyé par un commutateur de service mobile, MSC;
une deuxième unité adaptée pour envoyer un deuxième message d'activation de canal à la BTS pour activer la liaison montante d'un canal d'appel de groupe en réponse à la réception d'un message de demande d'attribution envoyé par le MSC; et
une troisième unité adaptée pour envoyer un message « désactiver le canal de commande associé lent, SACCH, » du canal SDCCH pour libérer le canal SDCCH.

17. Dispositif de contrôleur de stations de base, BSC, **caractérisé en ce qu'**il comprend:
une première unité adaptée pour envoyer un premier message d'activation de canal à une station émettrice-réceptrice de base, BTS, pour activer la liaison descendante d'un canal de diffusion en réponse à la réception d'un message de demande d'attribution de VGCS envoyé par un commutateur de service mobile, MSC;
une deuxième unité adaptée pour envoyer un deuxième message d'activation de canal à la BTS pour activer la liaison montante d'un canal de diffusion en réponse à la réception d'un message de demande d'attribution envoyé par le MSC; et
une troisième unité adaptée pour envoyer un message « désactiver le canal de commande associé lent, SACCH, » du canal SDCCH pour libérer le canal SDCCH.
